Europäisches Patentamt

European Patent Office

Office européen des brevets

(19)

(11)     EP 0 663 793 B1

(12)                    EUROPÄISCHE PATENTSCHRIFT

(45) Veröffentlichungstag und Bekanntmachung des
     Hinweises auf die Patenterteilung:
     08.01.1997 Patentblatt 1997/02

(21) Anmeldenummer: 94926175.4

(22) Anmeldetag: 10.08.1994

(51) Int. Cl.$^6$: **A01K 1/015**

(86) Internationale Anmeldenummer:
     PCT/EP94/02657

(87) Internationale Veröffentlichungsnummer:
     WO 95/05072 (23.02.1995 Gazette 1995/09)

(54) **VERFAHREN ZUR HERSTELLUNG VON SORPTIONSMITTELN AUF DER BASIS VON SMEKTITEN UND CELLULOSEHALTIGEN MATERIALIEN MIT NIEDRIGEM SCHÜTTGEWICHT**

PROCESS FOR PRODUCING SORBENTS BASED ON BETONITES AND CELLULOSE-CONTAINING MATERIALS WITH A LOW BULK DENSITY

PROCEDES DE PREPARATION D'AGENTS DE SORPTION A BASE DE SMECTIDES ET DE MATERIAUX CONTENANT DE LA CELLULOSE DE FAIBLE MASSE VOLUMIQUE APPARENTE

(84) Benannte Vertragsstaaten:
     AT BE CH DE DK ES FR GB GR IE IT LI LU MC NL
     PT SE

(30) Priorität: 12.08.1993 DE 4327159

(43) Veröffentlichungstag der Anmeldung:
     26.07.1995 Patentblatt 1995/30

(73) Patentinhaber: SÜDCHEMIE AG
     D-80333 München (DE)

(72) Erfinder:
     • HÄHN, Reinhard
       D-84186 Vilsheim (DE)
     • HAUBENSAK, Otto
       D-83098 Brannenburg (DE)
     • EISGRUBER, Max
       D-84079 Bruckberg (DE)

(74) Vertreter: **Patentanwälte**
     **Dipl.-Ing. R. Splanemann**
     **Dr. B. Reitzner**
     **Dipl.-Ing. K. Baronetzky**
     **Tal 13**
     **80331 München (DE)**

(56) Entgegenhaltungen:
     EP-A- 0 039 522          EP-A- 0 424 001
     FR-A- 2 576 524          US-A- 4 686 937

**Beschreibung**

Die Erfindung betrifft ein Verfahren zur Herstellung von Sorptionsmitteln auf der Basis von Smektiten und cellulosehaltigen Materialien mit niedrigem Schüttgewicht. Diese Sorptionsmittel sind zur Aufnahme beliebiger Flüssigkeiten geeignet; sie eignen sich aber insbesondere als Streumittel für Heimtiere, weshalb sich die nachfolgenden Ausführungen insbesondere auf dieses Anwendungsgebiet beziehen.

Die Heimtierhaltung in einer weitgehend verstädterten Umwelt ist in zunehmendem Maß mit der Verwendung von Streumaterialien verbunden. Diese haben die Aufgabe, die von den Tieren abgegebenen Flüssigkeiten aufzusaugen und dabei möglichst die Geruchsentwicklung zu hemmen oder zu verhindern. Sie sollen ferner den halbfesten, feuchten tierischen Exkrementen und Ausscheidungen Feuchtigkeit entziehen, um damit die Geruchsentwicklung zu vermindern. Gute Streumaterialien haben darüberhinaus die Eigenschaft, die abgegebenen oder entzogenen Flüssigkeiten unter Bildung eines kompakten Klumpens aufzunehmen, der in einfacher und sparsamer Weise entfernt werden kann. Eine optimale Tierstreu hat somit ein hohes Saugvermögen.

Die auf dem Markt anzutreffenden Produkte sind einmal organische Substanzen, wie Stroh, Sägemehl, Holzspäne, Rinden, poröse Kunststoffperlen, geshreddertes Papier, Cellulosefasern, Agrarabfälle, Polyacrylate usw.; diese werden allein oder in Mischungen mit anorganischen Materialien eingesetzt. Der Nachteil der organischen Streumaterialien ist oftmals die nicht zufriedenstellende Klumpenbildung bzw. ihre Konsistenz sowie ihre Neigung zur bakteriellen Zersetzung, insbesondere im Zusammenwirken mit Feuchtigkeit.

Zum anderen sind aus der DE-A-3 816 225 geruchs- und feuchtigkeitsbindende Streumittel, insbesondere für Kleintiere, mit einem zellstoffhaltigen Material bekannt, wobei das zellstoffhaltige Material als Naßsubstanz mindestens mit einem kapillarfähigen, kleinkörnigen Stoff mit einer Korngröße < 0,5 mm in einem Gewichtsverhaltnis von 90:10 bis 20:80 gemischt ist. Als zellstoffhaltiges Material wird vorzugsweise die bei der Aufbereitung von Abwässern der Papierherstellung anfallende feuchte Masse (Papierfangstoff) mit einem Feuchtigkeitsgehalt von 50 bis 60 Gew.-% verwendet. Als kapillarfähiger Stoff kann z.B. Bentonit verwendet werden, der im unbehandelten Zustand einen Feuchtigkeitsgehalt von etwa 30 Gew.-% hat. Bevorzugt wird jedoch Bimssteinmehl mit einem Feuchtigkeitsgehalt von höchstens 30 Gew.-%. Die Mischung kann kompaktiert, tablettiert oder pelletiert werden. Es wurde jedoch festgestellt, daß diese Behandlungsmethoden nicht ausreichen, um ein Streumittel mit befriedigender Klumpenbildung zu erhalten.

Aus der DE-A-4 101 243 ist ferner eine Tierstreu sowie ein Verfahren zu ihrer Herstellung bekannt, bei dem ein Cellulosematerial mit Beschwerungsmitteln, Verdickern und/oder Bindemitteln sowie Wasser vermischt, entwässert, zerkleinert und getrocknet wird. Als Cellulosematerial können z.B. Holz, Holzprodukte, Rückstände aus der Holzverarbeitung und Stroh verwendet werden. Als Verdicker können z.B. Kieselsäure, silicatische Materialien, Zeolith, Bentonit und Polyacrylate verwendet werden.

Aus der DE-B-37 28 812 und der DE-C-38 25 905 sind Sorptionsmittel auf der Basis von Tonen und Tonmineralen mit einem Gehalt eines Minerals aus der Gruppe der Smektite bekannt, die zur Erzielung eines hohen Porenvolumnes bei Temperaturen von mehr als 650 °C gebrannt werden. Als Porosierungsmittel können organische Substanzen, wie Sägemehl, Kork, Reisschalen oder dergleichen zugesetzt werden. Diese Porosierungsmittel werden jedoch beim Erhitzen ausgebrannt und verbleiben nicht mehr im Produkt. Das nach dem Brennen erhaltene Material ist nicht mehr quellfähig.

Die US-A-4 607 594 betrifft ein gekörntes Sorptionsmittel, das als Tierstreu geeignet ist. Die Mischung enthält absorbierende Teilchen (z.B. cellulosehaltiges Material oder Ton) und inerte absorptive Körner, z.B. Vulkangestein, die mit einem Neutralisierungsmittel (Carbonat) behandelt wurden. Es handelt sich um eine trockene Mischung, bei deren Herstellung keine Scherkräfte angewendet werden.

Die US-A-4 591 598 und 4 657 881 betreffen ein Sorptionsmittel, enthaltend Tonmineralteilchen (vorzugsweise Smektitteilchen), die mit Hilfe von organischen Bindemitteln, wie lÖslichen Poylysacchariden verbunden sind. Es sind z. B. Celluloseester, wie CMC, genannt. Bei diesen Cellulosederivaten handelt es sich aber nicht um einen cellulosehaltigen Primärrohstoff.

Die US-A-5 188 064 betrifft ein Verfahren zur Verbesserung des Sorptionsvermögens eines quellfähigen Smektittones mit einer Teilchengröße von mindestens 95 % < 200 μm, wobei dieser Ton mit einem teilchenförmigen cellulosehaltigen Material mit einer Teilchengröße von mindestens 95 % < 2000 μm vermischt wird. Das Gewichtsverhältnis zwischen dem cellulosehaltigen Material und dem Smektit beträgt etwa 0,05 bis 3:1. Die Bestandteile können entweder trocken oder naß miteinander vermischt werden. Das nach dem Trockenverfahren erhaltene Gemisch ist extrem staubig. Die Cellulosekomponente ist nicht in das Produkt eingebunden, so daß das Material zu einem starken Haften an Fell und Pfoten von Tieren neigt. Als Streumaterial ist dieses Gemisch nicht brauchbar. Das nach dem Naßverfahren erhaltene Gemisch hat gegenüber einem naß verkneteten Gemisch eine höhere Dichte und ein geringeres Sorptionsvermögen.

Die EP-A-0 424 001 beschreibt ein als Streumittel für Heimtiere brauchbares Sorptionsmittel, enthaltend Calciumbentonit mit einem Anteil an Natriumbentonit von 1 bis 15%. Das Streumaterial kann auch andere Adsorbentien enthalten, z.B. Cellulosematerialien, wobei der Anteil an Natriumbentonit mindestens 65% betragen muß. Bei der Herstellung des Sorptionsmittels werden lediglich die trockenen Einzelkomponenten ohne Zufuhr von mechanischer Energie miteinander vermischt.

Der Erfindung lag die Aufgabe zugrunde, ein Verfahren zur Herstellung von Sorptionsmitteln auf Smektitbasis mit niedrigem Schüttgewicht bereitzustellen, bei dem ein beträchtlicher Anteil an cellulosehaltigen Materialien verwendet werden kann, ohne daß die Fähigkeit zur Klumpenbildung in Kontakt mit wässrigen Flüssigkeiten beeinträchtigt wird.

Die Erfindung betrifft somit ein Verfahren zur Herstellung eines Sorptionsmittels auf der Basis von Smektiten und cellulosehaltigen Materialen mit niedrigem Schüttgewicht; das Verfahren ist dadurch gekennzeichnet, daß man eine feuchte Mischung aus Smektit und zerkleinertem Holzmaterial oder einem anderen cellulosehaltigen Material pflanzlichen Ursprungs (cellulosehaltiger Primärrohstoff) unter inniger Scherwirkung mit nachfolgender Extrusion behandelt und diese trocknet und granuliert.

Bei der Würdigung der Vorteile des erfindungsgemäßen Verfahrens ist von folgendem auszugehen:

Ein Bentonit-Granulat, das aus einem hochwertigen Smektit (h.h. mit einem Montmorillonitgehalt von mindestens 60 Gew.-%) hergestellt wird, zeichnet sich durch folgende Eigenschaften aus:

- Fähigkeit zur Klumpenbildung bei Benutzung mit wäßrigen Flüssigkeiten,
- hohes Wasser- und Flüssigkeitsaufnahmevermögen, (≥ 120 Gew.-%),
- hohes Schüttgewicht (850 - 1000g/l)

Der Vorteil des erfindungsgemäßen Verfahrens besteht nun darin, ein Granulat unter Verwendung von Smektiten, wie Bentonit, und leichtgewichtigen cellulosehaltigen Primärrohstoffen herzustellen, das neben den vorstehend genannten Vorteilen des nur aus Bentonit bestehenden Granulats ein geringes Schüttgewicht (400-800, vorzugsweise 550-700 g/l) aufweist. Darüberhinaus kann das Wasseraufnahmevermögen durch die Verwendung der cellulosehaltigen Primärrohrstoffe erhöht werden.

Ein zerkleinertes cellulosehaltiges Material pflanzlichen Ursprungs stammt, z.B. von einjährigen Pflanzen oder Teilen davon, wie Stroh, Gras, Schilf, Spelzen, Spreu, zerkleinerten Erdnußschalen, Stengeln von Mais und Sonnenblumen sowie von langfaserigen Materialien, wie Baumwolle und Baumwolläbfällen, Flachs, Ramie, Hanf und Jute. Die langfaserigen Materialen werden jedoch weniger bevorzugt, da die Fasern bei der Herstellung der Mischung gekürzt werden müssen.

Zu den cellulosehaltigen Primärrohstoffen zählen nicht chemisch behandelte Cellulose, wie Sulfit- oder Sulfatzellstoff oder regenerierte Cellulose sowie wiederaufbereitetes Altpapier.

Das erhaltene getrocknete Granulat ist fest und hat eine Wasseraufnahmefähigkeit von mehr als 100%, vorzugsweise von mehr als 120%. Eine Methode zur Bestimmung der Wasseraufnahmefähigkeit ist nachstehend angegeben, desgleichen auch eine Methode zur Bestimmung des Wassergehalts des als Ausgangsmaterial verwendeten Smektits und des cellulosehaltigen Primärrohstoffs, sowie eine Methode zur Bestimmung des Wassergehalts des Granulats.

Der Smektit und der cellulosehaltige Primärrohstoff werden vorzugsweise bei einer Energieaufnahme von 2 bis 10, vorzugsweise von 3 bis 6 kWh/to Gemisch durch intensive Scherung miteinander vermischt. Der Smektitanteil befindet sich vorzugsweise an der Außenseite der Granulate.

Zum Vermischen wird vorzugsweise ein scherendes Aggregat (z.B. ein Bedeschi-Mischer oder ein Ziegelpreßaggregat der Firma Händle) verwendet.

Vorzugsweise stellt man das Verhältnis zwischen Smektit und cellulosehaltigem Primärrohstoff (bezogen auf die jeweilige Trockenmasse) auf 3.6 bis 12:1, insbesondere auf 4,2 bis 6,8:1 ein.

Als Smektit verwendet man vorzugsweise einen Erdalkali- oder Alkalibentonit, der im grubenfeuchten Zustand gewöhnlich einen Feuchtigkeitsgehalt von etwa 30 % hat. Der Smektit kann, insbesondere wenn der cellulosehaltige Primärrohstoff einen hohen Feuchtigkeitsgehalt hat, auch vorgetrocknet werden.

Die Trocknung des Sorptionsmittels erfolgt vorzugsweise dadurch, daß man das zu trocknende Material mit nicht mehr als 150°C, vorzugsweise mit nicht mehr als 120°C, belastet. Bei der Trocknung bei höheren Temperaturen kann eine Verminderung des Sorptionsvermögens des Smektits eintreten.

Das getrocknete Sorptionsmittel wird vorzugsweise auf eine Korngröße von etwa 0,1 bis 10 mm, insbesondere von etwa 1 bis 5 mm, granuliert, wobei mehr als etwa 70 Gew.-% des Granulats eine Teilchengröße von 2 bis 5 mm und weniger als etwa 30 Gew.-% des Granulats eine Teilchengröße von 1 bis 2 mm haben.

Vorzugsweise wird die extrudierte Mischung soweit getrocknet, daß der Wassergehalt des Granulats nicht mehr als 15 Gew.-% beträgt.

Vorzugsweise wird das Produkt soweit getrocknet, daß es 5 bis 15, vorzugsweise 6 bis 12 Gew.-% freies Wasser und 60 bis 90, vorzugsweise 68 bis 94 Gew.-% Smektit sowie 5 bis 25, vorzugsweise 10 bis 20 Gew.-% cellulosehaltigen Primärrohstoff (jeweils bezogen auf Trockensubstanz) enthält.

Das Verfahrensprodukt hat vorzugsweise ein Schüttgewicht von 400 - 800 g/l, insbesondere von 550 - 700 g/l, und eine Wasseraufnahme von etwa 100 - 200 %, insbesondere von 110 bis 150 %.

Das Verfahrensprodukt kann ferner mit an sich bekannten Sorptionsmitteln, z.B. organischen Sorptionsmitteln verschnitten werden. Weiterhin kann das Verfahrensprodukt mit Weißpigmenten, Desinfektionsmitteln und/oder Tierakzeptanzien vermischt werden.

Gegenstand der Erfindung ist ferner die Verwendung des vorstehend angegebenen Sorptionsmittels als Packungsmaterial, Aufsaugmittel für Flüssigkeiten (z.B. Körperflüssigkeiten, Öl, flüssige Chemikalien) sowie als Streumaterial für Heimtiere, insbesondere als Katzenstreu.

Der Wassergehalt des erfindungsgemäß verwendeten Smektits wird wie folgt bestimmt:

10 g Smektit werden in einer flachen Schale auf 0,01 g genau eingewogen und bei 105°C bis zur Gewichtskonstanz erhitzt (mindestens 2 Stunden). Anschließend läßt man die Probe im Exsikkator auf Raumtemperatur abkühlen und wiegt aus:

Auswertung:

$$\frac{\text{Einwaage - Auswaage}}{\text{Einwaage}} \times 100 = \text{Wassergehalt (\%)}$$

Der Wassergehalt des erfindungsgemäßen Sorptionsmittels wird ähnlich wie der Wassergehalt des Smektits bestimmt. Die Erhitzung erfolgt bei 105°C bis zur Gewichtskonstanz. Der Wassergehalt des cellulosehaltigen Materials wird in entsprechender Weise bestimmt (Trocknung bei 105°C bis zur Gewichtskonstanz).

Die Wasseraufnahmefähigkeit des erfindungsgemäßen Sorptionsmittels wird nach der Methode der Firma Westinghouse (Nr. 17-A) ermittelt (vergl. Industrial Minerals, August 1992, Seite 57). Hierbei wird das bis auf einen Restwassergehalt von 6 Gew.-% getrocknete Sorptionsmittel in einen kegeligen Behälter aus feinem Drahtgewebe (lichte Maschenweite 0,25 mm = 60 mesh, Durchmesser 7 cm, Höhe 7,6 cm) eingewogen (Einwaage E = 20 g). Anschließend wird das Gesamtgewicht (Drahtgewebe + Einwaage E = $E_1$ in g) ermittelt. Das gefüllte Gewebe wird 20 Minuten in eine mit Wasser gefüllten Glasschale derart eingehängt, daß das Sorptionsmittel vollständig untertaucht. Nach 20 Minuten nimmt man das Drahtgewebe aus dem Wasser und läßt es 20 Minuten abtropfen. Unmittelbar danach wird das Gewicht des Behälters mit Inhalt ermittelt ($E_2$ in g). Die Auswertung wird wie folgt durchgeführt:

$$\text{Wasseraufnahme in Prozent} = \frac{E_2 - E_1}{E} \times 100$$

Der Wasserdurchschlagtest wird wie folgt durchgeführt:

Auf eine eingeebnete und nicht verdichtete Schüttung des körnigen Sorptionsmittels in einer Glasschale (Durchmesser 140 mm, Höhe 75 mm, Füllhöhe 50 mm) wird Wasser aus einem 50 ml-Bürette gegeben und die Eindringtiefe beobachtet. Hierbei wird der Auslauf der Bürette in einer Höhe von 3 bis 4 cm in die Mitte der Schüttung gebracht, worauf 60 ml Leitungswasser innerhalb von 55 bis 60 Sekunden auslaufen gelassen werden. Nach einer Wartezeit von 3 Minuten wird an der Schalenunterseite geprüft, ob Wasser durchgelaufen ist; das Durchlaufen ist an einer Verfärbung des körnigen Materials an der Schalenunterseite erkennbar. Die Auswertung wird wie folgt durchgeführt:

- Verfärbung am Schalenboden nicht sichtbar: Test bestanden;
- Verfärbung am Schalenboden sichtbar: Test nicht bestanden.

Das Schüttgewicht wird wie folgt bestimmt:

Ein 500 ml-Meßzylinder wird zunächst leer gewogen. Darauf wird ein Pulvertrichter mit einer Öffnung von etwa 15 cm und einer Auslaßöffnung von etwa 3 cm aufgesetzt und innerhalb von etwa 5 Sekunden mit dem Sorptionsmittel- Granulat gefüllt. Danach wird der Pulvertrichter vom Meßzylinder abgenommen, und zwar so, daß das darin befindliche Granulat einen überstehenden Kegel bildet. Dieser wird mit einem breiten Spatel entlang der Schnittkante des Meßzylinders abgestreift. Der gefüllte Meßzylinder wird außen von anhängenden Körnern oder Staub befreit und erneut gewogen. Das Schüttgewicht wird wie folgt berechnet:

$$\text{Schüttgewicht (g/l)} = 2 \times \text{Gewicht netto (g/500 ml)}$$

Die Klumpenbildung kann qualitativ wie folgt bestimmt werden:

- Festigkeit 1 (ausreichend fest)

  - Klumpen besteht aus homogener Masse ohne sichtbare und fühlbare Körner
  - Klumpen zerbricht bei leichtem Druck in kleinere Bruchstücke
  - Klumpen ist feucht

- Festigkeit 2 (weich, matschig)

  - Klumpen besteht aus schmieriger Masse
  - Klumpen verbiegt sich beim Herausnehmen und zerfällt bei leichtem Druck
  - Klumpen ist naß

4

- Festigkeit 3 (bröckelig-naß)

  - Klumpen besteht aus nur leicht zusammenhaftender, krümeliger Masse
  - Klumpen zerfällt beim Herausnehmen oder bei leichtem Druck in viele einzelne Bruchstücke
  - Klumpen ist naß

Die Erfindung ist durch die nachstehenden Beispiele in nicht einschränkender Weise erläutert.

Beispiel 1 (Vergleich)

320 g grubenfeuchter bayerischer Calciumbentonit werden in einem Werner-Pfleiderer-Mischer 1 min. unter Zugabe einer kleinen Mengen destillierten Wassers vorgeknetet. Die Energieaufnahme beträgt 2 kWh/to. Ziel des Vorknetens ist die Homogenisierung des Bentonits und seine Überführung in eine plastische, gut knetbare Masse. Der ideale Wassergehalt wird erfahrungsgemäß durch Zugabe von soviel Wasser eingestellt, daß bei der Verknetung ein "schmatzendes" Geräusch entsteht und der Rohbentonit Plastillin ähnelt. Dies ist meist bei einem Wassergehalt von 30 bis 35 Gew.-% der Fall. Danach wird 5 min. weitergeknetet; der plastillinartige Zustand wird erhalten, indem man bei Bedarf etwas Wasser zugibt. Der geknetete Bentonit wird in etwa 1 bis 1,5 cm große Stücke zerkleinert, in eine Porzellanschale gegeben und im Umlufttrockenschrank 1 bis 2 Stunden bei 80 bis 85°C auf einen Wassergehalt von 4 bis 8 Gew.-% getrocknet. Dies ist daran erkennbar, daß die Stücke innen noch etwas dunkel gefärbt sind. Es wird die Granulatfraktion zwischen 1 und 5 mm abgesiebt, wobei der Anteil der Fraktion von 2 bis 5 mm mehr als etwa 80 % und der Anteil der Fraktion von 1 bis 2 mm etwa 20 % beträgt.

| | |
|---|---|
| Wassergehalt: | 6.3 Gew.-% |
| Schüttgewicht: | 992 g/l |
| Wasseraufnahmefähigkeit: | 114% |
| Wasserdurchschlagtest: | bestanden |
| Klumpenfestigkeit: | ausreichend fest (1) |

Beispiel 2

320 g grubenfeuchtem bayerischem Calciumbentonit (Wassergehalt etwa 30 bis 35 Gew.-%) werden 5 Gew.-% Sägestaub (bezogen auf Trockensubstanz) mit einer Korngröße von < 1 mm und einem Wassergehalt von 31 % zugesetzt. Dann wird wie in Beispiel 1 bei einer Energieaufnahme von 3 kWh/to geknetet. Das Knetgemisch wird getrocknet und granuliert (Teilchengröße etwa 1 - 5 mm - Korngrößeverteilung: 80 % = 2 bis 5 mm; 20 % = 1 bis 2 mm). Das Granulat hat folgende Eigenschaften:

| | |
|---|---|
| Wassergehalt: | 5,9 Gew.-% |
| Schüttgewicht: | 775 g/l |
| Wasseraufnahme: | 126 % |
| Wasserdurchschlagtest: | bestanden |
| Klumpenfestigkeit: | ausreichend fest (1) |

Beispiel 3

Die Arbeitsweise von Beispiel 2 wird mit der Abweichung wiederholt, daß 10% Sägestaub eingeknetet werden. Das Granulat (Korngrößeverteilung: 80 % = 2 bis 5 mm; 20 % = 1 bis 2 mm) hat folgende Eigenschaften:

| | |
|---|---|
| Wassergehalt: | 6,3 Gew.-% |
| Schüttgewicht: | 659 g/l |
| Wasseraufnahme: | 137 %. |
| Wasserdurchschlagtest: | bestanden |
| Klumpenfestigkeit: | ausreichend fest (1) |

Beispiel 4

Die Arbeitsweise von Beispiel 2 wird mit der Abweichung wiederholt, daß 15 Gew.-% Sägestaub eingeknetet werden. Das Granulat (Korngrößeverteilung: 80 % = 2 bis 5 mm; 20 % = 1 bis 2 mm) hat folgende Eigenschaften:

| | |
|---|---|
| Wassergehalt: | 5,4 Gew.-% |
| Schüttgewicht: | 573 g/l |
| Wasseraufnahme: | 145 % |
| Wasserdurchschlagtest: | bestanden |
| Klumpenfestigkeit: | ausreichend fest (1) |

Beispiel 5

Die Arbeitsweise von Beispiel 2 wird mit der Abweichung wiederholt, daß 25 Gew.-% Sägestaub eingeknetet werden. Das Granulat (Korngrößeverteilung: 80 % = 2 bis 5 mm; 20 % = 1 bis 2 mm) hat folgende Großen hat folgende Eigenschaften:

| | |
|---|---|
| Wassergehalt: | 6,1 Gew.-% |
| Schüttgewicht: | 406 g/l |
| Wasseraufnahme: | 185 % |
| Wasserdurchschlagtest: | bestanden |
| Klumpenfestigkeit: | weich, matschig (2) |

Beispiel 6

Die Arbeitsweise von Beispiel 2 wird mit der Abweichung wiederholt, daß 10 % zerkleinertes Stroh bei einer Energieaufnahme von 5 KWh/to eingeknetet werden. Das Granulat (Korngrößeverteilung: 80 % = 2 bis 5 mm; 20 % = 1 bis 2 mm) hat folgende Eigenschaften:

| | |
|---|---|
| Wassergehalt: | 6,8 Gew.-% |
| Schüttgewicht: | 674 g/l |
| Wasseraufnahme: | 134 % |
| Wasserdurchschlagtest: | bestanden |
| Klumpenfestigkeit: | ausreichend fest (1) |

Beispiel 7 (Vergleich)

Die Arbeitsweise von Beispiel 2 wird mit der Abweichung wiederholt, daß 42 % Papierreststoff eingekßetet werden. Bei dem Papierreststoff handelt es sich um Rückstände aus der Papierindustries mit einem Feststoffgehalt von etwa 51 % und etwa 22% Kalk sowie 10 % Kaolin. Das Granulat (Korngrößeverteilung: 80 % = 2 bis 5 mm; 20 % = 1 bis 2 mm) hat folgende Eigenschaften:

| | |
|---|---|
| Wassergehalt: | 5,3 Gew.-% |
| Schüttgewicht: | 670 g/l |
| Wasseraufnahme: | 102 % |
| Wasserdurchschlagtest: | nicht bestanden |
| Klumpenfestigkeit: | bröckelig-naß (3) (nicht kompakt entfernbar). |

Beispiel 8 (Vergleich)

Nach der Arbeitsweise von Beispiel C der US-A-5 188 064 wurden folgende Versuche durchgeführt:

(a) Trockenverfahren
800 g Natriumbentonit mit einem Wassergehalt von 7,8 Gew.-%, einem Schüttgewicht von 960 g/l und einem Teilchengrößebereich von 2,0 bis 0,5 mm wurden mit 200 g Weichholzfasern (Lignocel F9, Handelsprodukt der Fa. J. Rettenmaier & Söhne GmbH & Co., Ellwangen) mit einem Wassergehalt von 12,8 Gew.-%, einem Schüttgewicht von 150 g/l und einem Teilchengrößenbereich von 1,2 bis 0,5 mm in einem Kunststoffbeutel trocken miteinander vermischt. Der Wassergehalt des Gemisches betrug 8,9 Gew.-%. Das Gemisch war extrem staubig, so daß das Material zu einem starken Haften an Fell und Pfoten von Tieren neigt.

(b) Naßverfahren
1000 g des trockenen Gemisches (a) wurden mit 500 g Wasser in einem Eirich-Mischer vermischt. Nach der Wasserzugäbe (etwa 15 Sekunden) und einer Nachrührzeit von einer Minute bildeten sich runde Granulate mit einem Durchmesser von etwa 2 bis 4 mm, welche leicht aneinander hafteten. Es zeigten sich aber auch vereinzelt deutlich größere feuchte Klumpen in der Mischung. Die Mischung erwärmte sich während der Rührzeit deutlich und wies einen Wassergehalt (nach einer kurzen Verweilzeit bis zur Trocknung) von 40,5 Gew.-% auf. Die feuchten Granulate wurden in einem Umlufttrockenschrank bei 75 °C getrocknet. Nach dem Abkühlen wurde die Fraktion von 2,0 bis 0,5 mm abgesiebt. Der Siebrückstand (> 2 mm) wurde mit einem Backenbrecher zerkleinert, und die Siebfraktion von 2,0 bis 0,5 mm wurde der ersten Siebfraktion zugesetzt. Das Material hatte einen Wassergehalt von 0,8 Gew.-%, ein Schüttgewicht von 511 g/Liter und eine Wasseraufnahme von 573 %. Das Material bestand den Wasserdurchschlagtest und hatte eine ausreichende Klumpenfestigkeit (1)

(c) Knetverfahren (erfindungsgemäß)
1000 g des trockenen Gemisches (a) wurden mit 500 g Leitungswasser versetzt. Das Gemisch wurde in einem Knetaggregat der Firma Werner & Pfleiderer 5 Minuten geknetet. Das feuchte Gemisch (Wassergehalt 45,0 Gew.-

% nach einer kurzen Verweilzeit bis zur Trocknung) erwärmte sich etwas beim Verkneten. Das feuchte Material wurde nach dem Trocknen in einem Umlufttrockenschrank bei 75 °C mit einem Backenbrecher zerkleinert und auf einen Korngrößenbereich von 2,0 bis 0,5 mm abgesiebt.

Das Material hatte einen Feuchtigkeitsgehalt von 9,6 Gew.-%, ein Schüttgewicht von 482 g/Liter und eine Wasseraufnahme von 624 %. Es bestand den Wasserdurchschlagtest. Die Klumpenfestigkeit war ausreichend (1).

Das erfindungsgemäße Produkt hatte also ein niedrigeres Schüttgewicht und eine höhere Wasseraufnahme als das Vergleichsprodukt (b), obwohl aufgrund der Verknetung eine Verdichtung zu erwarten war. Die höhere Wasseraufnahme der Produkte (b) und (c) gegenüber den Produkten nach den Beispielen 1 bis 7 ist dadurch bedingt, daß der verwendete Natriumbentonit schon als Ausgangsprodukt eine höhere Wasseraufnahme hat als der Calciumbentonit.

**Patentansprüche**

1. Verfahren zur Herstellung von Sorptionsmitteln auf der Basis von Smektiten und cellulosehaltigen Materialien mit niedrigem Schüttgewicht, dadurch gekennzeichnet, daß man eine feuchte Mischung aus Smektit und zerkleinertem Holzmaterial oder einem anderen cellulosehaltigen Material pflanzlichen Ursprungs, d.h. cellulosehaltiger Primärrohstoff, unter inniger Scherwirkung mit nachfolgender Extrusion behandelt und anschließend trocknet und granuliert.

2. Verfahren nach Anspruch 1, dadurch gekennzeichnet, daß man den Smektit und den cellulosehaltigen Primärrohstoff bei einer Energieaufnahme von 2 bis 10, vorzugsweise von 3 bis 6 kWh/to Gemisch durch intensive Scherung miteinander vermischt.

3. Verfahren nach Anspruch 1 oder 2, dadurch gekennzeichnet, daß man einen cellulosehaltigen Primärrohstoff mit einem Wassergehalt von 10 bis 40, vorzugsweise von 20 bis 30 Gew.-% einsetzt.

4. Verfahren nach einem der Ansprüche 1 bis 3, dadurch gekennzeichnet, daß man das Verhältnis von Smektit und cellulosehaltigem Primärrohstoff, bezogen auf die jeweilige Trockenmasse auf 3,6 bis 12:1, vorzugsweise auf 4,2 bis 6,8:1 einstellt.

5. Verfahren nach einem der Ansprüche 1 bis 4, dadurch gekennzeichnet, daß man als Smektit einen Erdalkali- oder Alkali-Bentonit verwendet.

6. Verfahren nach einem der Ansprüche 1 bis 5, dadurch gekennzeichnet, daß man das getrocknete Sorptionsmittel auf eine Korngröße von etwa 0,1 bis 10 mm, vorzugsweise von etwa 1 bis 5 mm, granuliert, wobei mehr als etwa 70 Gew.-% des Granulats eine Teilchengröße von 2 bis 5 mm und weniger als etwa 30 Gew.-% des Granulats eine Teilchengröße von 1 bis 2 mm haben.

7. Verfahren nach einem der Ansprüche 1 bis 6, dadurch gekennzeichnet, daß man die extrudierte Mischung soweit trocknet, daß der Wassergehalt des Granulats nicht mehr als 15 Gew.-% beträgt.

8. Verfahren nach einem der Ansprüche 1 bis 7, dadurch gekennzeichnet, daß man das Produkt soweit trocknet, daß es 5 bis 15, vorzugsweise 6 bis 12 Gew.-% freies Wasser und 60 bis 90, vorzugsweise 68 bis 94 Gew.-% Smektit sowie 5 bis 25, vorzugsweise 10 bis 20 Gew.-% cellulosehaltigen Primärrohstoff, jeweils bezogen auf Trockensubstanz, enthält.

9. Verfahren nach einem der Ansprüche 1 bis 8, dadurch gekennzeichnet, daß das Verfahrensprodukt ein Schüttgewicht von etwa 400 bis 800 g/l, vorzugsweise von etwa 550 bis 700 g/l und eine Wasseraufnahme von etwa 100 bis 200 % , insbesondere von etwa 110 bis 150 % hat.

10. Verfahren nach einem der Ansprüche 1 bis 9, dadurch gekennzeichnet, daß man das Verfahrensprodukt mit an sich bekannten Sorptionsmitteln, zum Beispiel mit organischen Sorptionsmitteln, verschneidet.

11. Verfahren nach einem der Ansprüche 1 bis 10, dadurch gekennzeichnet, daß man das Verfahrensprodukt mit Weißpigmenten, Desinfektionsmitteln und/oder Tierakzeptanzien vermischt.

12. Verwendung des nach dem Verfahren nach einem der Ansprüche 1 bis 11 hergestellten Sorptionsmittels als Packungsmaterial, Aufsaugmittel für Flüssigkeiten sowie als Streumaterial für Heimtiere, insbesondere als Katzenstreu.

**Claims**

1.  Process for manufacturing sorbents based on smectites and cellulose-containing materials with low bulk density, characterised in that a moist mixture of smectite and chopped-up wood material or another cellulose-containing material of vegetable origin, i.e. cellulose-containing primary raw material, is processed under intensive shearing action with subsequent extrusion and is then dried and granulated.

2.  Process according to claim 1, characterised in that the smectite and the cellulose-containing primary raw material are mixed with one another by intensive shearing with a power consumption of 2 to 10, preferably of 3 to 6 kWh/to of mixture.

3.  Process according to claim 1 or 2, characterised in that a cellulose-containing primary raw material with a water content of 10 to 40, preferably of 20 to 30 wt % is used.

4.  Process according to any one of claims 1 to 3, characterised in that the ratio of smectite and cellulose-containing primary raw material is set at 3.6 to 12 : 1, preferably at 4.2 to 6.8 : 1, referred to the respective dry matter.

5.  Process according to any one of claims 1 to 4, characterised in that an alkaline earth or alkali bentonite is used as smectite.

6.  Process according to any one of claims 1 to 5, characterised in that the dried sorbent is granulated to a grain size of about 0.1 to 10 mm, preferably of about 1 to 5 mm, wherein more than about 70 wt % of the granulate has a particle size of 2 to 5 mm and less than about 30 wt % of the granulate has a particle size of 1 to 2 mm.

7.  Process according to any one of claims 1 to 6, characterised in that the extruded mixture is dried to the point where the water content of the granulate comes to not more than 15 wt %.

8.  Process according to any one of claims 1 to 7, characterised in that the product is dried to the point where it contains 5 to 15, preferably 6 to 12 wt % of free water and 60 to 90, preferably 68 to 94 wt % of smectite as well as 5 to 25, preferably 10 to 20 wt % of cellulose-containing primary raw material, referred to dry matter in each case.

9.  Process according to any one of claims 1 to 8, characterised in that the process product has a bulk density of about 400 to 800 g/l, preferably of about 550 to 700 g/l and a water absorption of about 100 to 200%, in particular of about 110 to 150%.

10. Process according to any one of claims 1 to 9, characterised in that the process product is blended with sorbents known per se, for example with organic sorbents.

11. Process according to any one of claims 1 to 10, characterised in that the process product is mixed with white pigments, disinfectants and/or animal attractants.

12. Use of the sorbent manufactured by the process according to any one of claims 1 to 11 as a packing material, absorbent material for liquids and as a litter material for domestic animals, in particular as cat litter.

**Revendications**

1.  Procédé pour préparer des sorbants à base de smectites et de matériau contenant de la cellulose à faible masse volumique apparente, caractérisé en ce qu'on soumet un mélange humide de smectite et d'un matériau à base de bois broyé, ou d'un autre matériau contenant de la cellulose d'origine végétale, c'est-à-dire une matière première primaire contenant de la cellulose, à une opération de cisaillement intime, suivie d'une extrusion, puis on le sèche et on le granule.

2.  Procédé selon la revendication 1, caractérisé en ce qu'on mélange l'une à l'autre la smectite et la matière première primaire contenant de la cellulose, pour une puissance absorbée de 2 à 10 et de préférence de 3 à 6 kWh/tonne de mélange, sous l'effet d'un cisaillement intensif.

3.  Procédé selon la revendication 1 ou 2, caractérisé en ce qu'on utilise une matière première primaire contenant de la cellulose ayant une teneur en eau de 10 à 40, et de préférence de 20 à 30 % en poids.

4. Procédé selon l'une des revendications 1 à 3, caractérisé en ce qu'on ajuste le rapport de la smectite à la matière première primaire contenant de la cellulose à une valeur de 3,6 à 12:1 et de préférence de 4,2 à 6,8:1, en se basant à chaque fois sur l'extrait sec.

5. Procédé selon l'une des revendications 1 à 4, caractérisé en ce qu'on utilise comme smectite une bentonite alcalino-terreuse ou alcaline.

6. Procédé selon l'une des revendications 1 à 5, caractérisé en ce qu'on granule le sorbant séché à une granulométrie d'environ 0,1 à 10 mm et de préférence d'environ 1 à 5 mm, auquel cas plus d'environ 70 % des granulés ont une granulométrie de 2 à 5 mm, et moins d'environ 30 % en poids des granulés ont une granulométrie de 1 à 2 mm.

7. Procédé selon l'une des revendications 1 à 6, caractérisé en ce qu'on sèche le mélange extrudé jusqu'à ce que la teneur en eau du granulé ne soit pas supérieure à 15 % en poids.

8. Procédé selon l'une des revendications 1 à 7, caractérisé en ce qu'on sèche le produit jusqu'à ce qu'il contienne de 5 à 15, et de préférence de 6 à 12 % en poids d'eau libre et de 60 à 90, et de préférence de 68 à 94 % en poids de smectite, ainsi que 5 à 25 et de préférence de 10 à 20 % en poids de matière première primaire contenant de la cellulose, toujours par rapport à l'extrait sec.

9. Procédé selon l'une des revendications 1 à 8, caractérisé en ce que le produit obtenu par le procédé a une masse volumique apparente d'environ 400 à 800 g/l, de préférence d'environ 550 à 700 g/l, et une absorption d'eau d'environ 100 à 200 %, en particulier d'environ 110 à 150 %.

10. Procédé selon l'une des revendications 1 à 9, caractérisé en ce qu'on coupe le produit obtenu par le procédé avec des sorbants connus en soi, par exemple avec des sorbants organiques.

11. Procédé selon l'une des revendications 1 à 10, caractérisé en ce qu'on mélange le produit obtenu par le procédé avec des pigments blancs, des désinfectants et/ou des produits acceptables par les animaux.

12. Utilisation du sorbant préparé par le procédé selon l'une des revendications 1 à 11, comme matériau d'emballage, produit absorbant pour liquides, ou encore comme matériau de litière pour animaux domestiques, en particulier comme litière pour chats.